# FASCICULE DE BREVET EUROPEEN

(11) **EP 3 555 143 B1**
(45) Date de publication et mention de la délivrance du brevet: **21.04.2021**
(21) Numéro de dépôt: 17821998.6
(22) Date de dépôt: 14.12.2017
(51) Int. Cl.: C08C 19/25, C08F 236/10, C08L 15/00, B60C 1/00

(54) **ÉLASTOMÈRE DIÉNIQUE PORTANT DES GROUPES PENDANTS ANTHRACÉNYLES**
DIENELASTOMER MIT ANTHRACENYL-SEITENGRUPPEN
DIENE ELASTOMER BEARING ANTHRACENYL PENDANT GROUPS

(30) Priorité: 15.12.2016 FR 1662516
(43) Date de publication de la demande: 23.10.2019
(73) Titulaire: Compagnie Générale des Etablissements Michelin, 63000 Clermont-Ferrand (FR)
(72) Inventeur: FLEURY, Etienne, 63040 Clermont-Ferrand Cedex 9 (FR); SCHNELL, Benoit, 63040 Clermont-Ferrand Cedex 9 (FR)
(74) Mandataire: Gandon-Pain, Sylvie
(86) Numéro de dépôt international: PCT/FR2017/053566
(87) Numéro de publication internationale: WO 2018/109397

(56) Documents cités:
- WO-A1-2015/091020
- JP-A- 2012 251 118

## Description

Le domaine de la présente invention est celui des élastomères qui portent en dehors de leurs extrémités des motifs anthracényles pendants, notamment utilisables dans une composition de caoutchouc pour pneumatique.

Il est connu de réticuler les élastomères diéniques dans une composition de caoutchouc pour conférer à la composition de caoutchouc les propriétés d'élasticité, de rigidité et de renforcement souhaitées selon l'application envisagée. Il est donc habituel depuis de très nombreuses années de vulcaniser, c'est-à-dire réticuler sous l'action du soufre, les élastomères diéniques dans une composition de caoutchouc destinée à être utilisée dans un pneumatique. La réaction de vulcanisation procède d'une réaction entre les unités diéniques de l'élastomère et un système de réticulation qui comprend des réactifs à base de soufre. Les systèmes de réticulation à base de soufre, aussi appelés système de vulcanisation, ont été perfectionnés au fil des années, en association avec les procédés de préparation des compositions de caoutchouc. Ainsi, les systèmes de vulcanisation sont multi-composants dans la mesure où ils contiennent en plus du soufre ou d'un agent donneur de soufre, des accélérateurs de vulcanisation, des activateurs, et éventuellement des retardateurs de vulcanisation. En raison de la différence de réactivité des composants du système de vulcanisation vis-à-vis de la température et vis-à-vis des autres ingrédients de la composition de caoutchouc, il est d'usage d'introduire les composants du système de vulcanisation à différents stades du procédé de fabrication de la composition de caoutchouc. Force est de constater que le caractère multi-composant du système de vulcanisation complexifie le procédé de préparation des compositions de caoutchouc. Il y aurait un intérêt à le simplifier en substituant au système multi-composant un seul réactif, sans modifier substantiellement les propriétés de rigidité à moyenne déformation et les propriétés de renforcement de la composition de caoutchouc utilisable dans un pneumatique.

Les Demanderesses ont trouvé un nouvel élastomère diénique qui, avec l'utilisation d'un seul réactif pour réticuler, permet d'accéder à des compositions de caoutchouc présentant des propriétés de rigidité à moyenne déformation et des propriétés de renforcement comparables aux compositions de caoutchouc conventionnelles et vulcanisées au soufre.

Ainsi, un premier objet de l'invention est un élastomère diénique comportant au moins une chaîne polymère portant, en dehors de ses extrémités, des groupes pendants, caractérisé en ce que les groupes pendants sont des motifs anthracényles, substitués ou non.

Un deuxième objet de l'invention est une composition de caoutchouc à base d'une charge renforçante, d'un système de réticulation et d'un élastomère diénique conforme à l'invention.

L'invention porte aussi sur un article semi-fini pour pneumatique comprenant la composition de caoutchouc conforme à l'invention, ainsi qu'un pneumatique comprenant une composition de caoutchouc conforme à l'invention ou un article semi-fini conforme à l'invention.

### I. DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Par l'expression composition "à base de", il faut entendre dans la présente description une composition comportant le mélange et/ou le produit de réaction in situ des différents constituants utilisés, certains de ces constituants de base (par exemple l'élastomère, la charge ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée à la fabrication de pneumatique.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges....

L'élastomère diénique selon l'invention a pour caractéristique essentielle de comporter une chaîne polymère qui porte des motifs anthracényles comme groupes pendants en dehors de ses extrémités de chaîne. Les motifs anthracényles peuvent être substitués ou non.

Par élastomère (ou indistinctement caoutchouc) "diénique", qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Ces définitions étant données, on entend plus particulièrement par élastomère diénique susceptible d'être utilisé dans les compositions conformes à l'invention tout copolymère obtenu par copolymérisation d'un ou plusieurs diènes conjugués avec l'éthylène, une α-monooléfine aliphatique acyclique ayant 3 à 18 atomes de carbone ou leur mélange comme par exemple ceux décrits dans le document WO 2005028526, WO 2004035639 et WO 2007054224.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre d'a-monooléfines aliphatiques acycliques ayant 3 à 18 atomes de carbone, on peut citer le propène, le butène, l'hexène, l'octène, l'hexadécène.

Préférentiellement, l'élastomère diénique est choisi dans le groupe constitué par les copolymères de butadiène, les copolymères d'isoprène et leurs mélanges. De tels copolymères sont plus préférentiellement les copolymères d'éthylène et de butadiène.

De préférence, les groupes pendants, motifs anthracényles, sont de formule (I) ou (II) dans lesquelles le symbole * représente un rattachement à la chaîne polymère.

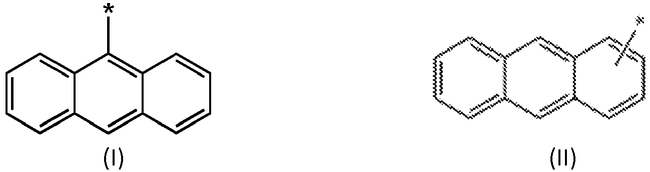

L'élastomère conforme à l'invention peut être préparé par modification d'un premier élastomère diénique par un agent de modification qui porte un motif anthracényle, substitué ou non, et une fonction réactive vis-à-vis des doubles liaisons carbone-carbone du premier élastomère diénique. Le motif anthracényle peut être relié directement ou par l'intermédiaire d'un espaceur à la fonction réactive. Par espaceur, on entend un atome ou un groupe d'atomes. Parmi les atomes de carbone constituant les 3 noyaux benzéniques fusionnés du groupe anthracényle, l'un constitue le point de rattachement avec l'espaceur ou avec la chaîne polymère, les autres atomes de carbone pouvant être substitués.

Selon un mode de réalisation de l'invention, l'atome de carbone du groupe anthracényle relié directement ou indirectement à la fonction réactive est un des deux atomes de carbone du noyau benzénique central du groupe anthracényle. Le noyau benzénique central du groupe anthracényle est le noyau benzénique dont 4 des atomes de carbone sont liés aux atomes de carbone des deux autres noyaux benzéniques du groupe anthracényle. En appliquant la numérotation adoptée par IUPAC pour désigner les atomes de carbone constitutifs d'une molécule d'anthracène, on considère dans la présente demande que l'un des 2 atomes qui appartient au noyau benzénique central et qui n'a pas de liaison covalente avec les atomes de carbone des 2 autres cycles du groupe anthracényle est l'atome de carbone numéroté 9 du groupe anthracényle, que le groupe anthracényle soit substitué ou non par ailleurs. La représentation suivante d'une molécule d'anthracène illustre la position de l'atome de carbone 9.

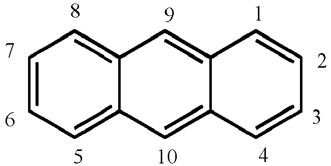

Selon ce mode de réalisation particulier et la convention adoptée pour la numérotation des atomes, le rattachement de l'espaceur ou de la chaîne polymère sur le motif anthracényle se fait sur l'atome de carbone numéroté 9. Selon ce mode de réalisation particulier de l'invention, le deuxième atome de carbone appartenant au noyau benzénique central du groupe anthracényle peut être substitué ou ne pas être substitué. Cet atome de carbone, selon la convention adoptée pour la numérotation est l'atome de carbone numéroté 10.

Selon une première variante, la fonction réactive est une fonction oxyde de nitrile et le premier élastomère diénique est modifié par une réaction de cycloaddition [2+3]. Selon une deuxième variante, la fonction réactive est une fonction hydrogénosilyle (SiH) et le premier élastomère diénique est modifié par réaction d'hydrosilylation.

Selon un mode de réalisation particulier de la première variante, l'espaceur est un groupe contenant un noyau benzénique dont un des atomes de carbone est substitué par le dipôle. Selon ce mode de réalisation, l'espaceur est de préférence de formule (III) 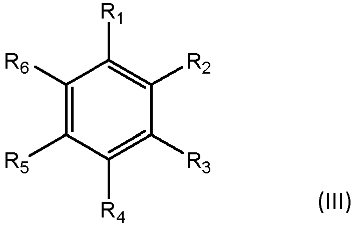 dans laquelle :
- quatre des 6 symboles R₁ à R₆, identiques ou différents, représentent un atome ou un groupe d'atomes
- le cinquième symbole représente le rattachement direct au dipôle oxyde de nitrile C≡N→O
- le sixième symbole représente un rattachement direct ou indirect au groupe anthracényle, substitué ou non,
- sachant qu'au moins un des symboles représentant un substituant en ortho du cinquième symbole est différent d'un atome d'hydrogène.

De préférence, trois des quatre symboles qui ne sont ni le cinquième symbole, ni le sixième symbole, représentent chacun un groupe alkyle, en particulier méthyle ou éthyle. Avantageusement, ils sont identiques. Mieux, ils sont en position méta l'un par rapport à l'autre. Le quatrième des quatre symboles qui ne sont ni le cinquième symbole, ni le sixième symbole représente de préférence un atome d'hydrogène. Le sixième symbole représente de préférence un rattachement au groupe anthracényle par l'intermédiaire d'un groupe comprenant un motif -CH₂O-, l'atome d'oxygène étant lié directement au carbone du noyau benzénique de l'espaceur.

A titre d'agents de modification 1,3-dipolaires, conviennent par exemple les composés de formule (IV) et (V)

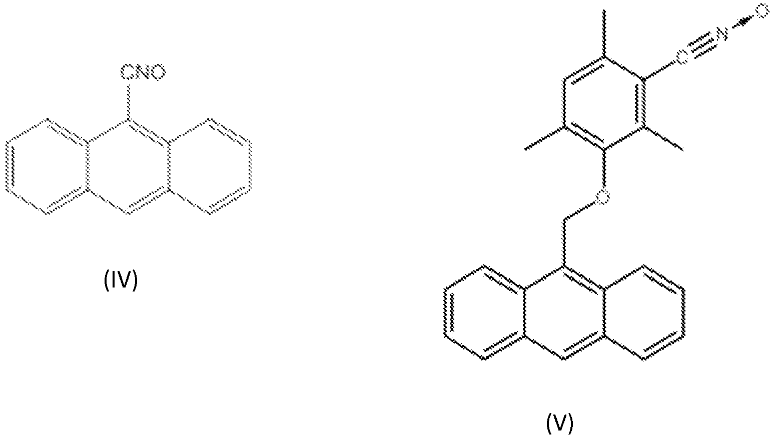

Selon un mode de réalisation particulier de la deuxième variante, l'espaceur est un hétéroatome ou une chaîne hydrocarbonée pouvant être interrompue ou substituée par un ou plusieurs hétéroatomes. A titre d'hétéroatome, on peut citer l'atome d'oxygène, l'atome de soufre, l'atome d'azote, l'atome de silicium. Comme espaceur conviennent tout particulièrement un atome d'oxygène et une chaîne hydrocarbonée, en particulier un groupe alcanediyle. Le nombre d'atomes de carbone dans le groupe alcanediyle peut varier dans une large mesure. Pour des raisons de disponibilité des silanes ou de leur accessibilité par la synthèse, le groupe alcanediyle est de préférence un groupe éthane-1,2-diyle ou propane-1,3-diyle. Typiquement, les silanes utiles aux besoins de l'invention peuvent être synthétisés à partir de l'halosilane correspondant par une réaction de réduction. La réduction d'un halosilane en un hydrogénosilane est une réaction bien connue de l'homme du métier, par exemple décrite par Lehman et al, Angewandte Chemie, International Edition, 48 (40), 7444-7447. L'halosilane qui se différencie du silane par le remplacement de la fonction SiH par une fonction SiX, X étant un atome d'halogène, peut être préparé à son tour par réaction d'hydrosilylation d'un précurseur qui est un anthracène substitué par un groupe hydrocarboné présentant une double liaison carbone-carbone. Comme précurseur, on peut citer le 1-vinylanthracène, le 1-allylanthracène, le 2-vinylanthracène, le 2-allylanthracène, le 9-vinylanthracène, le 9-allylanthracène.

A titre d'agents de modification silane conviennent particulièrement les composés de formule (VI) et tout particulièrement le composé de formule (VII). Dans la formule (VI), les symboles R, identiques ou différents, représentent chacun un alkyle, de préférence un méthyle ou un éthyle.

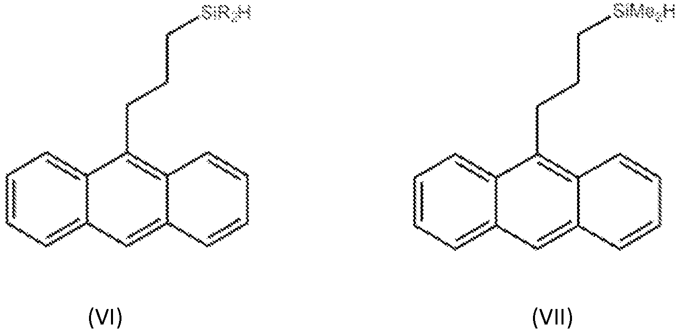

La réaction de modification de cycloaddition peut être réalisée en solution ou en masse, de préférence en masse, par exemple dans un mélangeur interne ou un mélangeur externe tel qu'un mélangeur à cylindres. Le mélange comportant le composé 1,3-dipolaire et le polymère est par exemple porté à une température du mélangeur externe ou du mélangeur interne inférieure à 60°C, puis mis sous presse ou en étuve à des températures allant de 80°C à 200°C. Alternativement le mélange est porté à une température du mélangeur externe ou du mélangeur interne supérieure à 60°C sans traitement thermique postérieur.

La réaction d'hydrosilylation est traditionnellement menée en solution en présence d'un catalyseur. Typiquement, le premier élastomère diénique, l'agent de modification et le catalyseur sont mis en solution dans un solvant, de préférence apolaire, sous agitation. A titre de solvant apolaire, on peut utiliser tout solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène, ainsi que leurs mélanges. A titre préférentiel, on utilise le méthylcyclohexane ou le toluène. De préférence, la quantité de solvant dans le milieu réactionnel, est telle que la concentration massique en polymère est comprise entre 1 et 40% en masse, de préférence entre 2 et 20% et encore plus préférentiellement entre 2 et 10% dans ledit solvant. A titre de catalyseur, conviennent tout particulièrement les catalyseurs à base de platine tels que l'acide hexachloroplatinique hexahydraté (catalyseur de Speier) et le catalyseur platine-1,1,3,3-tetraméthyl-1,3-divinylsiloxane (catalyseur de Karstedt) et plus préférentiellement le catalyseur de Karstedt. La température de réaction d'hydrosilylation est au moins 20°C et au plus 120°C, de préférence elle est d'au moins 50°C, voire au moins 60°C et au plus 100°C, voire au plus 90°C.

Le taux de greffage de l'agent de modification sur le premier élastomère diénique peut être ajusté de manière connue pour l'homme du métier, en faisant varier différentes conditions opératoires, telles que notamment la quantité d'agent de modification, la quantité de premier élastomère diénique, la température ou encore le temps de réaction. Les rendements de greffage sont bons, et peuvent atteindre les 80%.

Ainsi, une large gamme de taux de greffage peut être atteinte, sans qu'il ne soit observé de réaction secondaire. En effet, l'agent de modification réagit de façon sélective avec la ou les doubles liaisons du premier élastomère diénique, puisque les doubles liaisons conjuguées du motif anthracène présent dans l'agent de modification n'interfèrent pas dans la réaction de modification. Ainsi, le greffage de l'agent de modification donne accès à la synthèse d'élastomère portant des motifs anthracène, substitué ou non, pendants dont la concentration peut varier dans une large gamme, sans modification de la macrostructure de l'élastomère.

De préférence, l'élastomère diénique conforme à l'invention contient de 0.1% à 3% en mole, plus préférentiellement de 0.1% à 2% en mole, encore plus préférentiellement de 0.2% à 1.5% de motif anthracényle par mole d'élastomère. Quand le taux de motifs anthracényle est inférieur à 0,1%, l'effet technique visé risque d'être insuffisant.

La composition de caoutchouc selon l'invention contient l'élastomère diénique conforme à l'invention décrit selon l'un quelconque des modes de réalisation de l'invention. La composition comprend de préférence plus de 50 pce (parties en poids pour cents parties d'élastomère), de manière plus préférentielle plus de 70 pce de l'élastomère diénique conforme à l'invention. Le complément à 100 pce peut être complété par tout autre élastomère diénique, en particulier ceux choisis dans le groupe constitué par dans le groupe constitué par les polybutadiènes, les polyisoprènes, les copolymères de butadiène, les copolymères d'isoprène et leurs mélanges, plus particulièrement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères d'éthylène et de butadiène.

La composition de caoutchouc a aussi pour caractéristique essentielle de comprendre une charge renforçante et un système de réticulation.

On entend par charge renforçante tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge. Une telle charge renforçante consiste typiquement en des particules dont la taille moyenne (en masse) est inférieure au micromètre, généralement inférieure à 500 nm, le plus souvent comprise entre 20 et 200 nm, en particulier et plus préférentiellement comprise entre 20 et 150 nm. A titre de charge renforçante, on peut citer les noirs de carbone et les silices traditionnellement utilisés dans les compositions de caoutchouc pour pneumatique.

Selon le mode de réalisation dans lequel la silice est utilisée comme charge renforçante seule ou en mélange avec un noir de carbone, la composition de caoutchouc contient un agent de couplage (ou agent de liaison) au moins bifonctionnel destiné à assurer une connexion suffisante, de nature chimique et/ou physique, entre la silice et le polymère. On utilise en particulier des organosilanes ou des polyorganosiloxanes au moins bifonctionnels. On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

A la place de la silice, on peut utiliser toute charge inorganique renforçante ou toute charge recouverte d'une couche inorganique capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface. A titre de charge inorganique renforçante, on citera également les charges minérales du type alumineuse, en particulier de l'alumine (Al₂O₃) ou des (oxyde)hydroxydes d'aluminium, ou encore des oxydes de titane renforçants, par exemple décrits dans US 6 610 261 et US 6 747 087.

Le système de réticulation peut être à base de soufre, de donneurs de soufre, de peroxydes, de bismaléimides ou de leurs mélanges. L'emploi de bismaléimide à titre d'agent de réticulation constitue un mode de réalisation préférentiel, puisque l'utilisation conjointe de bismaléimide et du polymère conforme à l'invention, notamment préparé par le procédé conforme à l'invention mis en œuvre sous l'un quelconque de ses modes de réalisation décrits, permet l'obtention de composition de caoutchouc avec des propriétés de rigidité à moyenne déformation et de renforcement comparables à une composition de caoutchouc vulcanisée.

La composition de caoutchouc peut contenir en outre d'autres additifs connus pour être utilisés dans des compostions de caoutchouc pour pneumatiques, tels que des plastifiants, des anti-ozonants, des antioxydants.

La composition de caoutchouc conforme à l'invention est typiquement fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 110°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

La composition de caoutchouc conforme à l'invention, pouvant être soit à l'état cru (avant réticulation ou vulcanisation), soit à l'état cuit (après réticulation ou vulcanisation), peut être utilisée dans un pneumatique, notamment dans un article semi-fini pour pneumatique.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II.1-Modification d'un copolymère de styrène et de 1,3-butadiène (SBR) par réaction d'hydrosilylation :

### II.1-1-Synthèse de l'agent de modification, le (3-(anthracèn-9-yl)propyl)diméthylsilane :

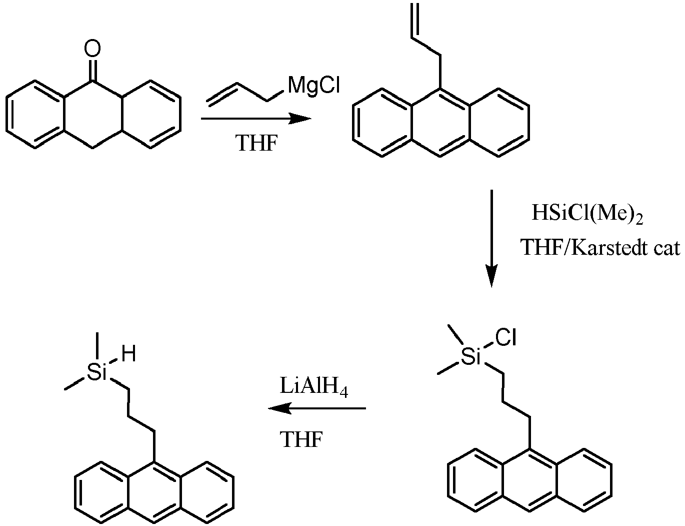

### Etape 1 :_Synthèse de 9-allylanthracène, CAS [23707-65-5], décrit par Karama, Usama et al, Journal of Chemical Research, 34(5), 241-242; 2010 ; Mosnaim,D. et al., Tetrahedron, 1969, vol. 25, p. 3485 - 3492.

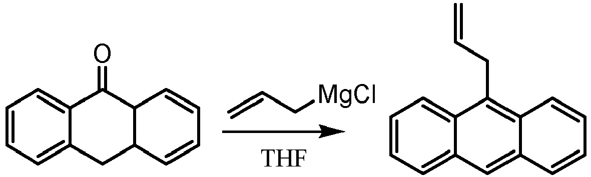

À une solution de chlorure d'allylmagnésium (235 ml, 0,467 mol, 2,0 M dans le THF, Aldrich) est ajoutée, sous argon, goutte à goutte, une solution d'anthrone (30,25 g, 0,155 mol) dans le THF anhydre (300 ml). Le milieu réactionnel est chauffé au reflux pendant 2 heures. Après refroidissement à 0 °C, une solution d'HCl (100 ml, 37 % solution) dans l'eau (170 ml) est ajoutée goutte à goutte. Le milieu réactionnel est agité vigoureusement pendant 1 heure. Après retour à température ambiante, la phase organique est extraite par du tert-butyl-méthyléther (t-BuOMe, 3 fois 100 ml), lavée par une solution de K₂CO₃, lavée par de l'eau et séchée par Na₂SO₄. Les phases organiques réunies sont concentrées sous pression réduite pour fournir une huile orange. Après purification sur colonne chromatographique (Al₂O₃ / éther de pétrole) une huile est obtenue. Le produit cristallise à +4°C
Un solide vert (30,45 g, rendement 90 %) de point de fusion 45 °C est obtenu.

La pureté molaire est supérieure à 93 % (RMN ¹H).

### Etape 2 :_Synthèse du (3-(anthracèn-9-yl)propyl)chlorodiméthylsilane CAS [150147-39-0]

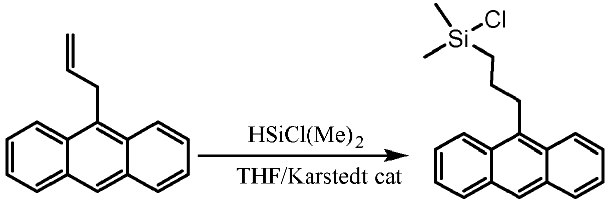

À une solution de 9-allylanthracène (15,49 g, 0,071 mol) dans le THF anhydre (100 ml), est ajouté le catalyseur de Karstedt (50 mg, solution à 2,4% de Pt dans le xylène). Une solution de diméthylchlorosilane (13,43 g, 0,142 mol, [1066-35-9], Aldrich) dans le THF anhydre (30 ml) est ensuite ajoutée goutte à goutte. Le milieu réactionnel est agité pendant 15 min puis chauffé à I 60 - 65 °C pendant 5 - 6 heures. Le mélange est alors refroidi à 20 °C et est concentré sous pression réduite pour conduire à une huile.

Après cristallisation dans le pentane (300 ml), un solide jaune (17,85 g, rendement 80 %) de point de fusion 81 °C est obtenu.

La pureté molaire est supérieure à 97 % (RMN ¹H - ²⁹Si).

### Etape 3:Synthèse du (3-(anthracèn-9-yl)propyl)diméthylsilane

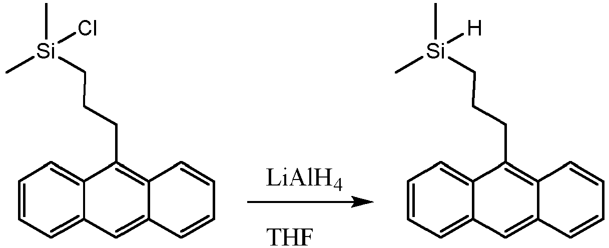

À une suspension de LiAlH₄ (1,20 g, 0,032 mol) dans le THF anhydre (50 ml), est ajoutée une solution de (3-(anthracèn-9-yl)propyl)chlorodiméthylsilane (13,97 g, 0,045 mol) dans le THF anhydre (100 ml) sous argon, goutte à goutte, en maintenant la température du milieu à 0 ºC. Le milieu réactionnel est agité pendant 15 heures à température ambiante. Ensuite, de l'eau (10 ml) est ajoutée goutte à goutte. Le mélange est agité pendant 15 - 20 min. la phase organique est extraite par le tert-butyl-méthyléther (t-BuOMe , 100 ml). La phase organique est lavée par l'eau (3 fois par 50 ml) et séchée sur Na₂SO₄ et concentrée sous pression réduite pour conduire à une huile. L'huile obtenue est diluée par le cyclohexane (50 ml) et filtrée sur gel de silice. Le cyclohexane est concentré sous pression réduite pour conduire à une huile. Le résidu cristallise à +4°C.

Un solide (10,13 g, rendement 81 %) de point de fusion 22-23 °C est obtenu.

### II.1-2-Caractérisation RMN des molécules synthétisées à l'issue des étapes 2 et 3 :

L'analyse structurale ainsi que la détermination des puretés molaires des molécules de synthèses des étapes 2 et 3 sont réalisées par une analyse RMN. Les spectres sont acquis sur un spectromètre Avance 3 400 MHz BRUKER équipé d'une sonde " large bande " BBFO-zgrad 5 mm. L'expérience RMN ¹H quantitative, utilise une séquence simple impulsion 30° et un délai de répétition de 3 secondes entre chacune des 64 acquisitions. Les échantillons sont solubilisés dans le chloroforme deutéré, sauf indication contraire. Ce solvant est également utilisé pour le signal de lock, sauf indication contraire.

Le spectre RMN ¹H couplé aux expériences 2D HSQC ¹H/13C et HMBC ¹H/¹³C permettent la détermination structurale des molécules (cf tableaux d'attributions). Les quantifications molaires sont réalisées à partir du spectre RMN 1D ¹H quantitatif.

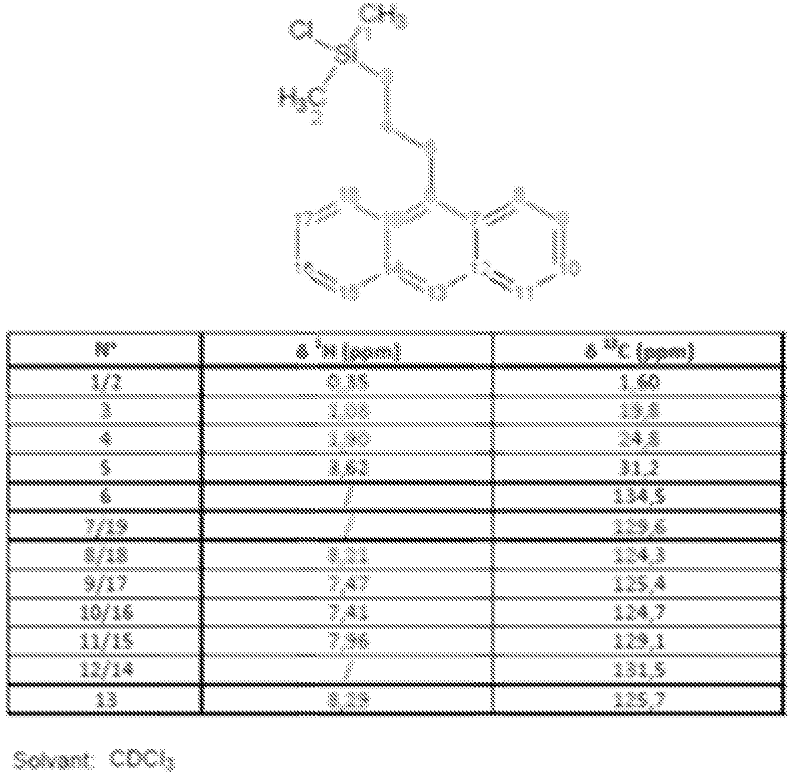

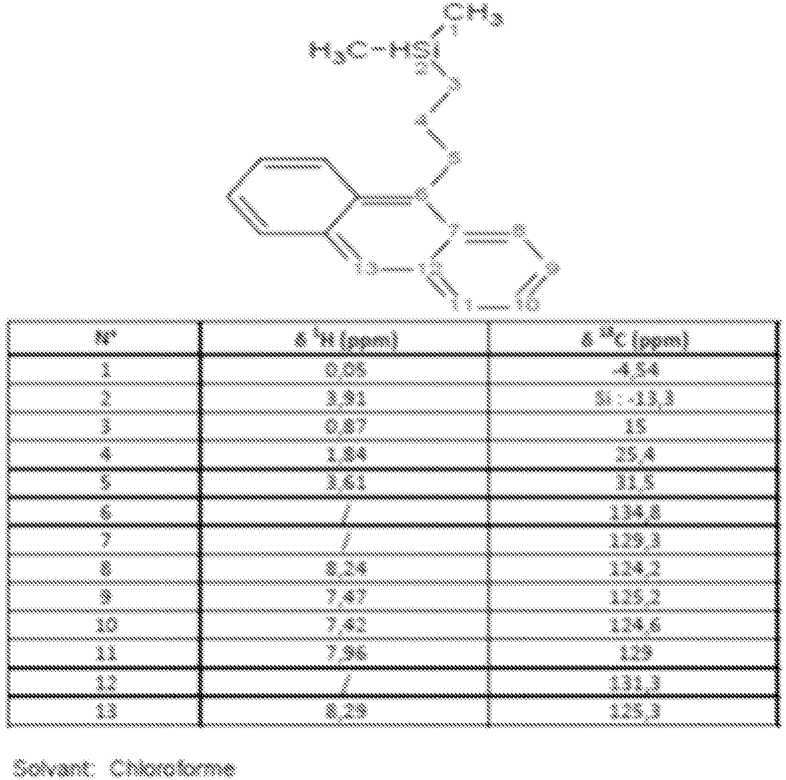

### II.1-3-Modification d'un SBR par l'agent de modification, (3-(anthracèn-9-yl)propyl)diméthylsilane :

L'agent de modification (3-(anthracèn-9-yl)propyl)diméthylsilane synthétisé est utilisé dans la réaction de modification du SBR selon le mode opératoire suivant :
2 g de SBR sont mis en solution dans 100 mL de toluène dans un réacteur de 250 mL équipé d'une agitation mécanique, le tout est placé sous atmosphère inerte (azote). 3 mmol (0,93 mL) de (3-(anthracèn-9-yl)propyl)diméthylsilane et 200 µL de platine-1,1,3,3-tetraméthyl-1,3-divinylsiloxane en solution dans le xylène (catalyseur de Karstedt) (n°CAS : 68478-92-2) sont ajoutés à la solution de polymère et le milieu réactionnel est chauffé à 60 °C. Après 24 heures à 60 °C sous agitation, on laisse le milieu réactionnel revenir à température ambiante. Une fois revenu à température ambiante, le milieu réactionnel est ensuite coagulé deux fois dans 250 mL de méthanol.L'élastomère remis en solution subit ensuite un traitement anti-oxydant de 0,4 parties pour cent parties d'élastomères (pce) de 4,4'-méthylène-bis-2,6-tert-butylphénol et de 0,4 parties pour cent parties d'élastomères (pce) de N-(1,3-diméthylbutyl)-N'-phényl-p-phénylènediamine.

Le rendement de greffage, défini comme étant le rapport de la quantité de silane greffé sur l'élastomère sur la quantité de silane introduite initialement, est de 79%. La distribution moléculaire du polymère modifié est identique à celle du polymère avant modification.

La détermination du taux de motif anthracényle sur le polymère est réalisée par analyse RMN. Les spectres sont acquis sur un spectromètre 500 MHz BRUKER équipé d'une sonde « large bande » BBIz-grad 5 mm. L'expérience RMN 1H quantitative, utilise une séquence simple impulsion 30° et un délai de répétition de 3 secondes entre chaque acquisition. Les échantillons sont solubilisés dans le chloroforme deuteré. Le spectre RMN ¹H permet de quantifier le taux de motifs anthracènyles greffés sur le polymère par intégration des signaux caractéristiques des protons suivants :
5H Motif Styrène : 7.41ppm à 6.0ppm
1H PB1-2 +2H PB1-4 : 5.67ppm à 4.5ppm

Le calcul du taux de motif anthracényle greffé a été réalisé sur le spectre 1H en intégrant le massif à 7.99 ppm en considérant 2 protons des carbones numérotés 1 et 8 du motif anthracényle, le symbole * symbolisant le rattachement au reste du greffon.

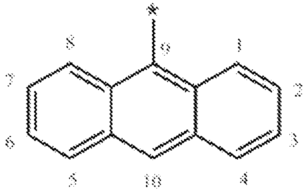

### II.2-Modification d'un polyisoprène (IR) et d'un SBR par réaction de cycloaddition :

Deux agents de modification ont été utilisés, les composés A et B.

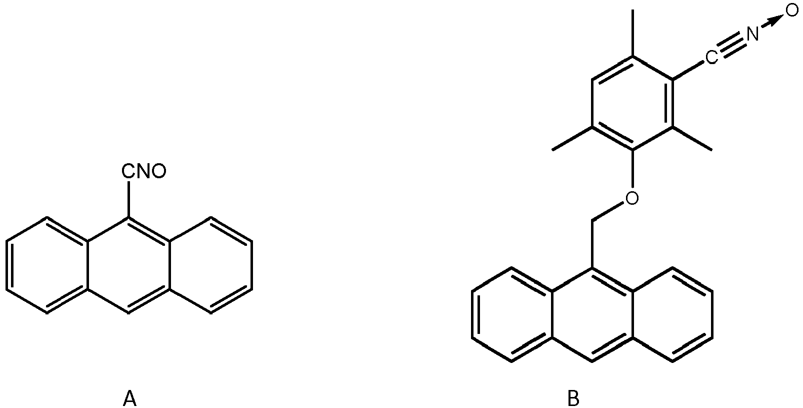

### II. 2-1 Synthèse du composé A, le anthracène-9-carbonitrile oxyde :

Le composé A est synthétisé selon le schéma réactionnel suivant :

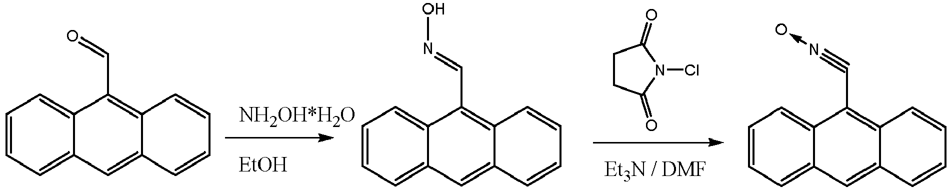

### Etape 1 : Synthèse de l'anthracène-9-carbaldéhyde oxime

Une suspension de 9-anthracènecarboxaldéhyde (10,40 g, 0,050 mol, [642-31-91], Aldrich) et d'hydroxylamine (16,60 g, 0,250 mol, 50 % dans l'eau) dans l'éthanol (175 ml) est agitée et portée à ébullition pendant 3 heures. Après retour à température ambiante, de l'eau (800 ml) est ajoutée et le solide jaune est filtré et lavé par l'eau (1L). Le produit est séché sous pression atmosphérique à température ambiante.
Un solide blanc (10,57 g, rendement 95 %) de point de fusion 162 °C est obtenu.
La pureté molaire est supérieure à 96 % (RMN ¹H).

### Etape 2 : Synthèse de l'anthracène-9-carbonitrile oxyde, selon le mode opératoire décrit par Xiaochun Han, Nicholas R. Natale, J.Heterocyclic Chem., 38, 2001, 415.

A une solution d'oxime de 9-anthracènecarboxaldéhyde (10,20 g, 0,046 mol) et de triéthylamine (9,30 g, 0,092 mol) dans le diméthylformamide (DMF, 125 ml) est ajoutée, goutte à goutte, une solution de N-chlorosuccinimide (12,31 g, 0,092 mol) sous vive agitation à température comprise entre 0 et +4 °C. Le mélange est agité pendant 1 heure, puis de l'eau (150 ml) est ajoutée. Le mélange est agité pendant 1 heure entre 0 et +4 °C. Le solide jaune est filtré et séché à température ambiante.
Après cristallisation dans l'acétate d'éthyle, un solide jaune (5,54 g) est obtenu avec un rendement 55 % et de point de fusion 121 °C.
La pureté molaire est supérieure à 97 % (RMN ¹H).

### II. 2-2 Synthèse du composé B, le 3-(anthracen-9-ylméthoxy)-2,4,6-triméthylbenzonitrile oxyde :

Le composé B est synthétisé selon le schéma réactionnel suivant : 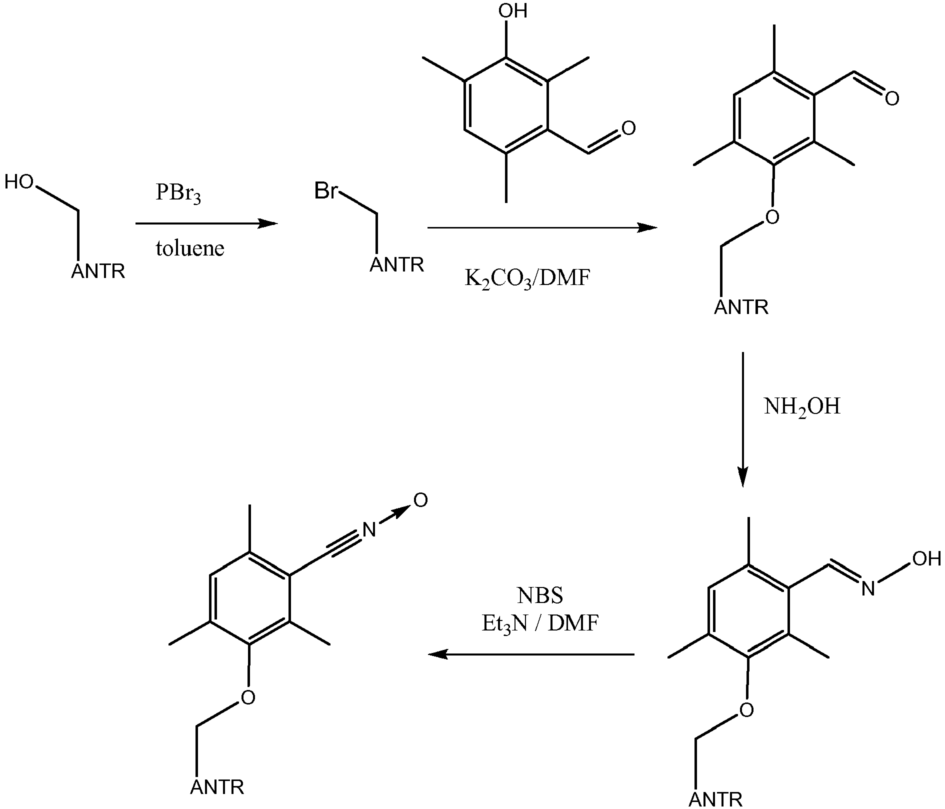 le symbole ANTR représentant le motif anthracényle comme indiqué ci-dessous :

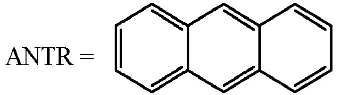

### Etape 1 : Synthèse de 3-hydroxy-2,4,6-triméthylbenzaldéhyde

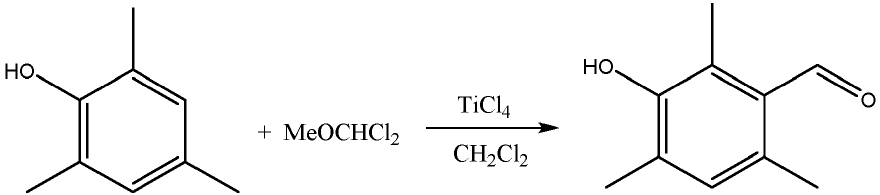

Le composé est synthétisé selon le mode opératoire décrit par Yakubov, A. P.; Tsyganov, D. V.; Belen'kii, L. I.; Krayushkin, M. M.; Bulletin of the Academy of Sciences of the USSR, Division of Chemical Science (English Translation); vol. 40; nb. 7.2; (1991); p. 1427 - 1432.

### Etape 2 :_Synthèse du 9-(bromométhyl)anthracène (CAS [2417-77-8])

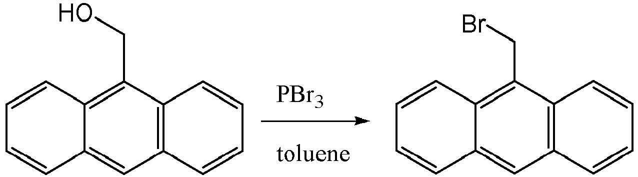

Le composé est synthétisé selon le mode opératoire décrit par Shah, Jitesh R.; Mosier, Philip D.; Kellogg, Glen E.; Westkaemper, Richard B.; Roth, Bryan L. Bioorganic and Medicinal Chemistry, 2009 , vol. 17, # 18 p. 6496-6504.

### Etape 3:Synthèse du 3-(anthracèn-9-ylméthoxy)-2,4,6-triméthylbenzaldéhyde

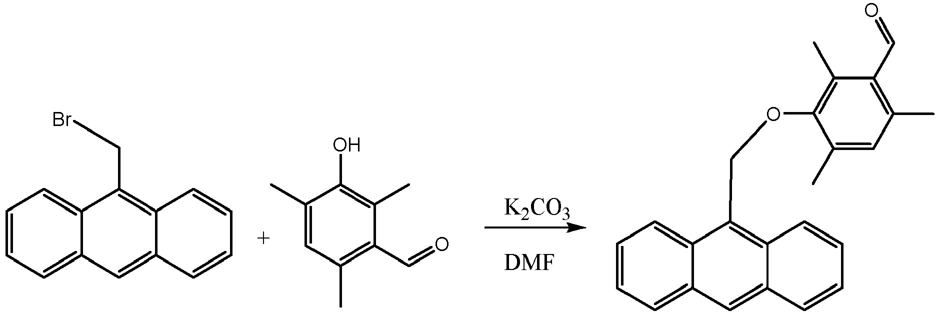

A une solution de 3-hydroxy-2,4,6-triméthylbenzaldéhyde (7,76 g, 0,047 mol) dans le DMF (300 ml), est ajouté du carbonate de potassium (6,52 g, 0,047 mol). Le milieu réactionnel est agité pendant 15-20 min. Puis une solution de 9-bromométhylanthracène (12,81 g, 0,047 mol) dans le DMF (100 ml) est ajoutée goutte à goutte. La température du milieu réactionnel est maintenue à 100-110 °C pendant 8 heures. Après retour à température ambiante, le mélange est dilué par l'eau (2 L) et le solide pale-jaune est filtré et lavé par l'eau (2 L). Le produit obtenu est séché sous pression atmosphérique à température ambiante.

Un solide (15,80 g, rendement 95 %) de point de fusion 147-148 °C est obtenu.

La pureté molaire est supérieure à 97 % (RMN ¹H).

### II.2-3-Caractérisation RMN des molécules synthétisées à l'issue des étapes 1 et 2 dans la synthèse de A et à l'issue des étapes 3, 4 et 5 dans la synthèse de B :

L'analyse structurale ainsi que la détermination des puretés molaires des molécules de synthèses sont réalisées par une analyse RMN. Les spectres sont acquis sur un spectromètre Avance 3 400 MHz BRUKER équipé d'une sonde " large bande " BBFO-zgrad 5 mm. L'expérience RMN ¹H quantitative, utilise une séquence simple impulsion 30° et un délai de répétition de 3 secondes entre chacune des 64 acquisitions. Les échantillons sont solubilisés dans un solvant deutéré, le chloroforme ou l'acétone, sauf indication contraire. Ce solvant est également utilisé pour le signal de lock, sauf indication contraire.

Le spectre RMN ¹H couplé aux expériences 2D HSQC ¹H/13C et HMBC ¹H/¹³C permettent la détermination structurale des molécules (cf tableaux d'attributions). Les quantifications molaires sont réalisées à partir du spectre RMN 1D ¹H quantitatif.

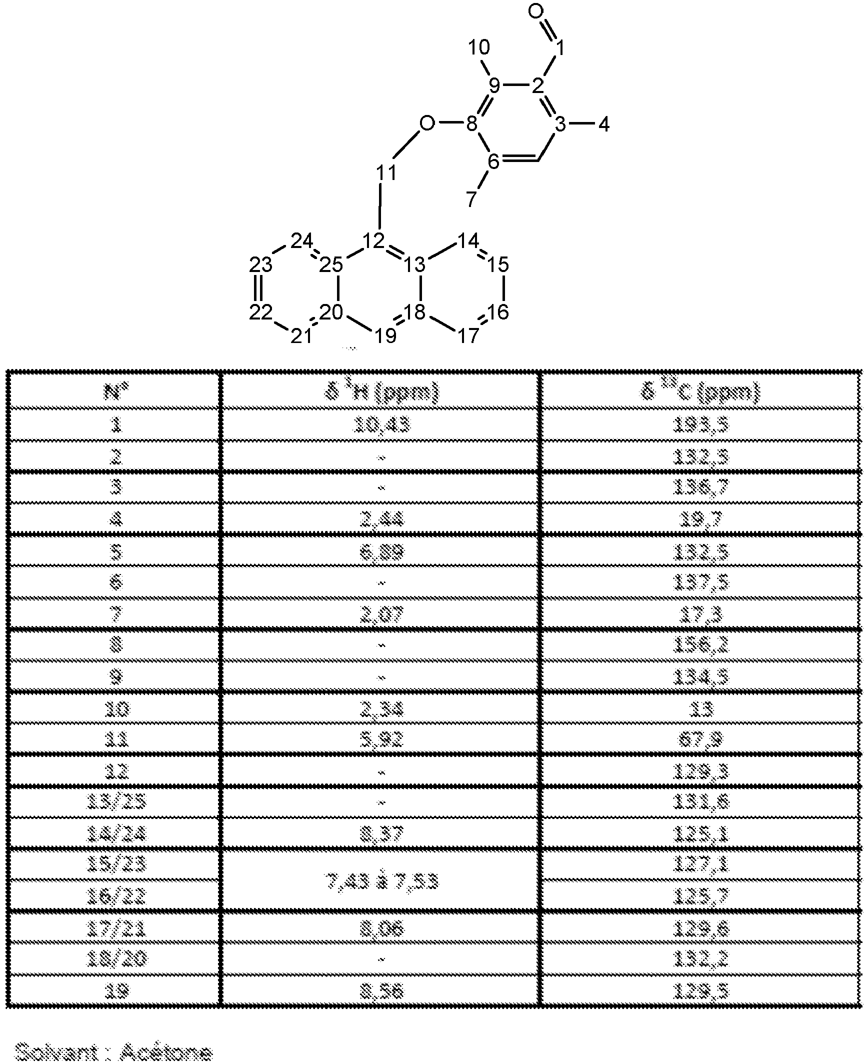

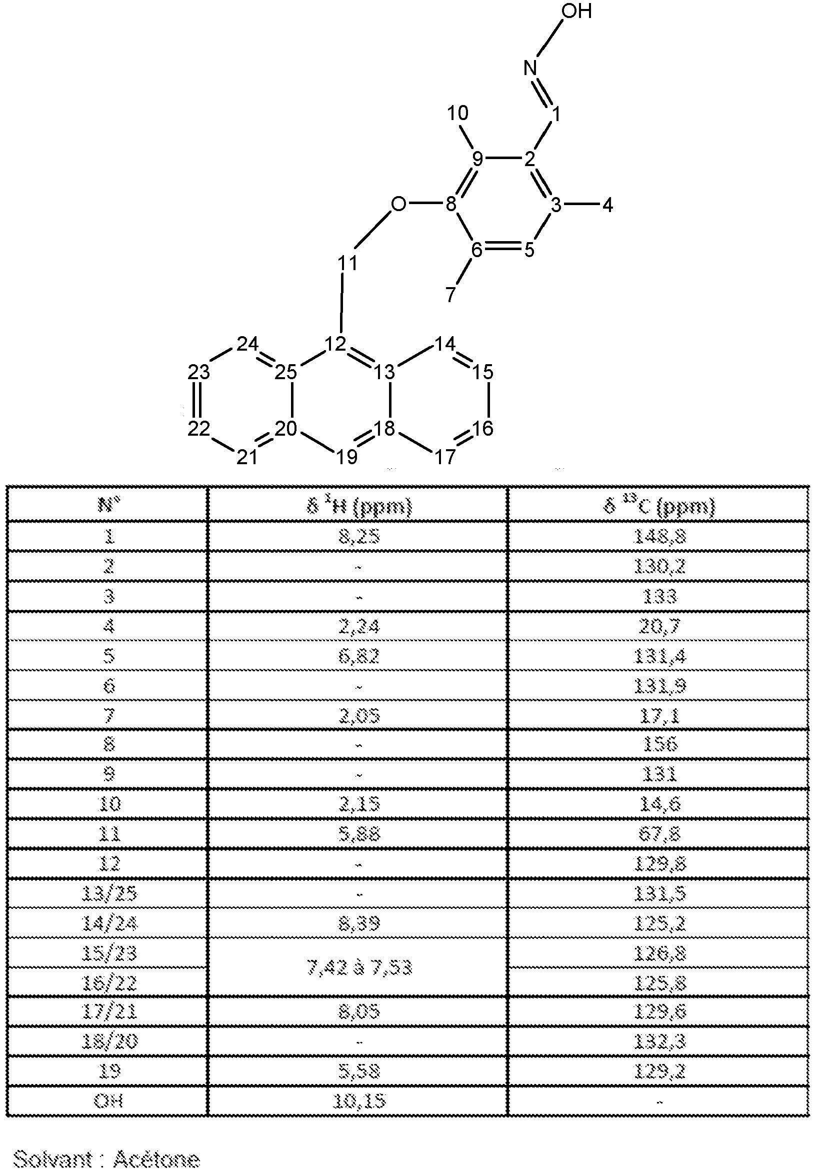

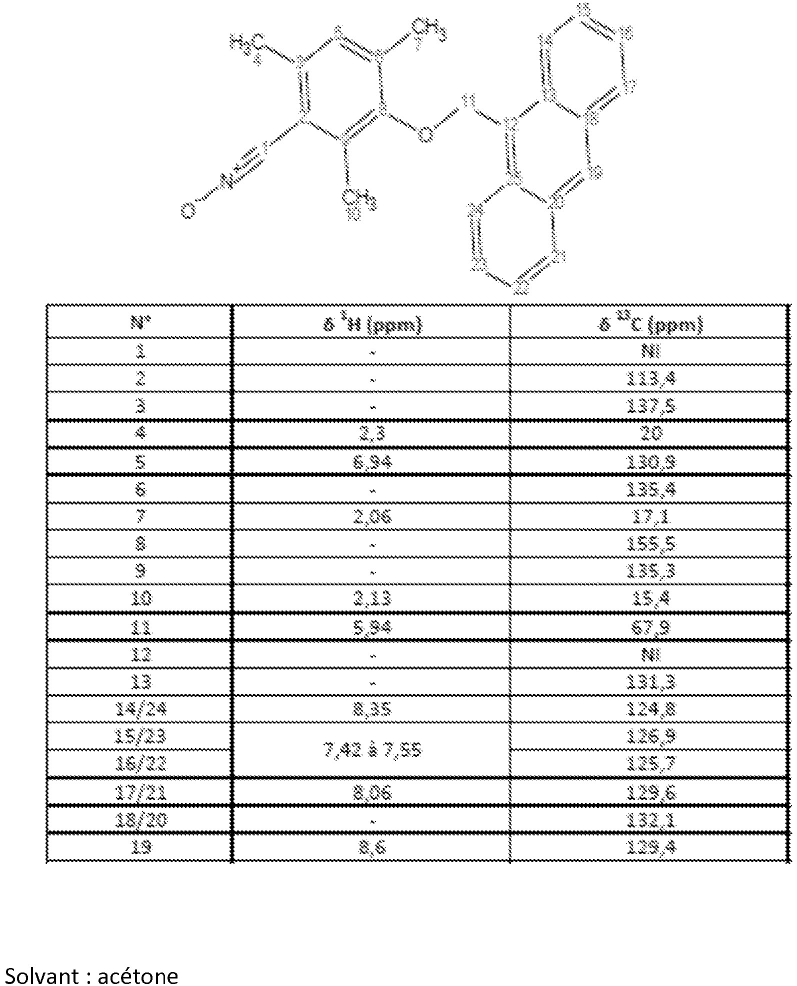

### II.2-4-Modification d'un SBR et d'un IR par les agents de modification, les composés 1,3-dipolaires A et B :

Les élastomères ont été modifiés selon le mode opératoire suivant :
A 20 g de polymère d'un SBR à 26% de styrène et 24% de motif 1,2 de la partie butadiénique, on incorpore le composé 1,3-dipolaire (1.51 mmol, soit 0.5% en mole d'élastomère) sur outil à cylindres (mélangeur externe à 30°C). Le taux de greffage ciblé est de 0.5% en mole. Le mélange est homogénéisé en 15 passes portefeuille. Cette phase de mélangeage est suivie d'un traitement thermique à 120°C pendant 10 minutes sous presse à 10 bars de pression.

A 15 g de polymère IR2200 Natsyn à 97% d'unité 1,4-cis, on incorpore le composé 1,3-dipolaire (0.66 mmol, soit 0.3% en mole d'élastomère) sur outil à cylindres (mélangeur externe à 30°C). Le mélange est homogénéisé en 15 passes portefeuille. Cette phase de mélangeage est suivie d'un traitement thermique à 120°C pendant 10 minutes sous presse à 10 bars de pression.

La réaction de greffage est mise en évidence par analyse RMN ¹H réalisée sur des échantillons solubilisés dans le disulfure de carbone, en présence de cyclohexane deutéré C₆D₆ pour le signal de lock.

Les rendements de greffage, définis comme étant le rapport de la quantité de composé 1,3-dipolaire greffé sur l'élastomère sur la quantité de composé 1,3-dipolaire introduit initialement, et déterminés à partir de l'analyse RMN ¹H figurent dans le tableau suivant selon le polymère et le composé 1,3-dipolaire.

| Composé 1,3-dipolaire | A | B |
|---|---|---|
| SBR | 57% | 84% |
| IR | 73% | 84% |

### II.3-Compositions de caoutchouc :

Les essais de traction sont effectués conformément à la norme française NF T 46-002 de septembre 1988. On mesure en seconde élongation (c'est-à-dire après accommodation) le module sécant nominal calculé en se ramenant à la section initiale de l'éprouvette (ou contrainte apparente, en MPa, à 50% d'allongement (moyenne déformation) noté MA50, 100% et 300% d'allongement notés respectivement MA100 et MA300. L'indice de renforcement est donné par le rapport entre les valeurs de MA300 et de MA100.

Toutes ces mesures de traction sont effectuées dans les conditions normales de température (23±2°C) et d'hygrométrie (50±5% d'humidité relative), selon la norme française NF T 40-101 (décembre 1979).

### 1^{er} essai

Deux compositions de caoutchouc C et D sont préparées. La composition C est une composition témoin, puisque l'élastomère diénique, un polyisoprène (IR) (Natsyn 2200 à 97% d'unité 1,4-cis), ne contient pas de motifs anthracène pendants en dehors des extrémités de chaîne. La composition D est une composition où l'élastomère diénique est un IR portant des motifs anthracène pendants (soit 0.25% en mole d'élastomère) en dehors de ses extrémités obtenu par mélangeage du Natsyn 2200 et de 5 pce de {[3-(anthracen-9-ylmethoxy)-2,4,6-trimethylphenyl]methylidyne} azane oxide selon un travail thermomécanique de 1 min 30 à 25°C pendant environ 5 à 6 min dans un mélangeur interne Polylab de 85cm3 rempli à 70%.

Le système de réticulation de la composition C est un système de vulcanisation multi-composant. Le système de réticulation de la composition D est constitué d'un seul composant, un bismaléimide.

Les formulations des compositions figurent dans le tableau 1. Les compositions C et D sont préparées de la manière suivante:
On introduit dans un mélangeur interne Polylab de 85 cm³, rempli à 70% et dont la température initiale de cuve est d'environ 60°C, l'élastomère diénique, la charge renforçante, l'agent de couplage éventuel puis, après une à deux minutes de malaxage, les divers autres ingrédients à l'exception du système de réticulation sont introduits dans le mélangeur. On conduit alors un travail thermomécanique (phase non-productive) en une étape (durée totale du malaxage égale à environ 5 min), jusqu'à atteindre une température maximale de "tombée" de 160°C. On récupère le mélange ainsi obtenu, on le refroidit puis on ajoute le système de réticulation sur un mélangeur externe (homo-finisseur) à 25°C, en mélangeant le tout (phase productive) pendant environ 5 à 6 min.

Les compositions ainsi obtenues sont ensuite calandrées sous la forme de plaques (épaisseur de 2 à 3 mm) pour la mesure de leurs propriétés physiques ou mécaniques.

La composition D présente une rigidité à moyenne déformation équivalente à celle du témoin vulcanisé, composition C, bien que présentant un système réticulant simplifié, tout en maintenant un renforcement comparable.

### 2^{ème} essai

Deux compositions de caoutchouc E et F sont préparées. La composition E est une composition témoin, puisque l'élastomère diénique, un copolymère d'éthylène et de 1,3-butadiène, ne contient pas de motifs anthracène pendants en dehors des extrémités de chaîne. La composition F est une composition selon l'invention, l'élastomère diénique étant un copolymère d'éthylène et de 1,3-butadiène portant des motifs anthracène pendants (soit 0.29% en mole d'élastomère) en dehors de ses extrémités obtenu par mélangeage du copolymère d'éthylène et de 1,3-butadiène et de 5 pce de {[3-(anthracen-9-ylmethoxy)-2,4,6-trimethylphenyl]methylidyne} azane oxide selon un travail thermomécanique de 1 min 30 à 25°C pendant environ 5 à 6 min dans un mélangeur interne Polylab de 85cm3 rempli à 70%.

Le copolymère d'éthylène et de 1,3-butadiène contient 66%mol d'unités éthylène et 34%mol d'unités butadiène et présente une masse molaire moyenne en nombre (Mn) de 175000 g/mol. Il est préparé selon un procédé de polymérisation conforme à l'exemple 4-2 décrit dans le document EP 1 954 705 B1 au nom des Demanderesses. La masse molaire moyenne en nombre est mesurée par analyse de chromatographie d'exclusion stérique ou SEC (Size Exclusion Chromatography) selon les conditions décrites ci-après. Le polymère est solubilisé, dans du tétrahydrofuranne contenant 1%vol. d'eau distillée, à une concentration d'environ 1 g/l. Puis la solution est filtrée sur filtre de porosité 0,45µm avant injection. L'appareillage utilisé est un chromatographe « WATERS alliance ». Le solvant d'élution est du tétrahydrofuranne. Le débit est de 0,7 ml/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ». Le volume injecté de la solution de l'échantillon de polymère est 100 µl. Le détecteur est un réfractomètre différentiel « WATERS 2410 » et le logiciel d'exploitation des données chromatographiques est le système « WATERS EMPOWER». Les masses molaires moyennes calculées sont relatives à une courbe d'étalonnage réalisée à partir de polystyrènes étalons commerciaux « PSS READY CAL-KIT ».

Le système de réticulation de la composition E est un système de vulcanisation multi-composant. Le système de réticulation de la composition F est constitué d'un seul composant, un bismaléimide.

Les formulations des compositions figurent dans le tableau 2. Les compositions E et F sont préparées de la même manière que les compositions C et D.

La composition F présente une rigidité à moyenne déformation du même ordre de grandeur que le témoin vulcanisé, composition E, bien que présentant un système réticulant simplifié, tout en maintenant un renforcement comparable.

En résumé, l'élastomère diénique modifié de façon à ce qu'il porte des motifs anthracényles pendants en dehors des extrémités de la chaîne polymère confère une composition de caoutchouc réticulé avec un système de réticulation simplifié des propriétés de rigidité à moyenne déformation et de renforcement comparable, voire légèrement améliorée à une composition de caoutchouc contenant l'élastomère diénique non modifié et réticulé avec un système de vulcanisation multicomposant.

**Tableau 1**

| Composition | C | D |
|---|---|---|
| IR (1) | 100 | - |
| IR (2) | - | 100 |
| Silice (3) | 60 | 60 |
| Antioxydant (4) | 3 | 3 |
| Paraffine | 1 | 1 |
| Silane (5) | 4.5 | 4.5 |
| ZnO (6) | 2.7 | - |
| Acide Stéarique (7) | 2.5 | - |
| Soufre | 1.3 | - |
| Accélérateur (8) | 1.6 | - |
| Bismaléimide (9) | - | 2.5 |

| Propriétés à cuit | | |
|---|---|---|
| MA50 | 2.09 | 2.04 |
| MA300/MA100 | 1.45 | 1.78 |

| | | |
|---|---|---|
| (1) Natsyn 2200 de la société Goodyear (2) Natsyn 2200 modifié (3) silice "Zeosil 1165 MP" société Solvay-Rhodia sous forme de microperles (4) N-1,3-diméthylbutyl-N-phényl-para-phénylènediamine ("Santoflex 6-PPD" société Flexsys) (5) TESPT ("Si69" société Evonik-Degussa) ; (6) Oxyde de zinc (grade industriel - société Umicore) (7) Stéarine ("Pristerene 4931" - société Uniqema) (8) N-cyclohexyl-2-benzothiazyl-sulfénamide ("Santocure CBS" société Flexys). (9) 1,1'-(Methylenedi-4,1-phenylene)bismaleimide (Sigma-Aldrich) | | |

**Tableau 2**

| Composition | B-0 | B-1 |
|---|---|---|
| Elastomère (1) | 100 | |
| Elastomère (2) | - | 100 |
| Silice (3) | 60.0 | 60.0 |
| Antioxydant (4) | 3.0 | 3.0 |
| Paraffine | 1.0 | 1.0 |
| Silane (5) | 4.5 | 4.5 |
| ZnO (6) | 2.7 | - |
| Acide Stéarique (7) | 2.5 | - |
| Soufre | 0.9 | - |
| Accélérateur (8) | 1.1 | - |
| Bismaléimide (9) | - | 2.5 |

| Propriétés à cuit | | |
|---|---|---|
| MA50 | 4.62 | 4.39 |
| MA300/MA100 | 1.71 | 1.71 |

| | | |
|---|---|---|
| (1) copolymère éthylène-butadiène (2) copolymère éthylène-butadiène modifié (3) silice "Zeosil 1165 MP" société Rhodia sous forme de microperles (4) N-1,3-diméthylbutyl-N-phényl-para-phénylènediamine ("Santoflex 6-PPD" société Flexsys) (5) TESPT ("Si69" société Degussa) ; (6) oxyde de zinc (grade industriel - société Umicore) (7) Stéarine ("Pristerene 4931" - société Uniqema) (8) N-cyclohexyl-2-benzothiazyl-sulfénamide ("Santocure CBS" société Flexys). (9) 1,1'-(Methylenedi-4,1-phenylene)bismaleimide (Sigma-Aldrich) | | |

## Revendications

1. Elastomère diénique copolymère obtenu par copolymérisation d'un ou plusieurs diènes conjugués avec l'éthylène, une α-monooléfine aliphatique acyclique ayant 3 à 18 atomes de carbone ou leur mélange et comportant au moins une chaîne polymère portant en dehors de ses extrémités des groupes pendants, **caractérisé en ce que** les groupes pendants sont des motifs anthracènyles, substitués ou non.

2. Elastomère selon la revendication 1 dans lequel le motif anthracényle est de formule (I) ou (II) 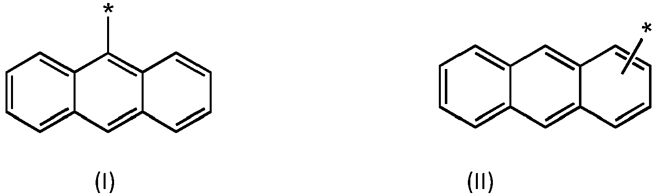 dans lesquelles le symbole * représente un rattachement à la chaîne polymère.

3. Elastomère selon l'une quelconque des revendications 1 à 2 lequel élastomère est un copolymère d'éthylène et de butadiène.

4. Elastomère selon l'une quelconque des revendications 1 à 3, lequel élastomère contient de 0.1% à 3% en mole, préférentiellement de 0.1% à 2% en mole de motif anthracényle par mole d'élastomère.

5. Composition de caoutchouc à base d'une charge renforçante, d'un système de réticulation et d'un élastomère diénique défini à l'une quelconque des revendications 1 à 4.

6. Composition de caoutchouc selon la revendication 5 dans laquelle la charge renforçante comprend un noir de carbone ou une silice ou leur mélange.

7. Article semi-fini pour pneumatique comprenant une composition de caoutchouc défini selon la revendication 6.

8. Pneumatique qui comprend une composition de caoutchouc définie à la revendication 5 ou 6, ou un article semi-fini défini à la revendication 7.

## Patentansprüche

1. Dienelastomer-Copolymer, das durch Copolymerisation eines oder mehrerer konjugierter Diene mit Ethylen, einem acyclischen aliphatischen α-Monoolefin mit 3 bis 18 Kohlenstoffatomen oder einer Mischung davon erhalten wurde und mindestens eine Polymerkette, die außerhalb ihrer Enden Seitengruppen trägt, umfasst, **dadurch gekennzeichnet, dass** es sich bei den Seitengruppen um gegebenenfalls substituierte Anthracenyleinheiten handelt.

2. Elastomer nach Anspruch 1, wobei die Anthracenyleinheit die Formel (I) oder (II) aufweist: 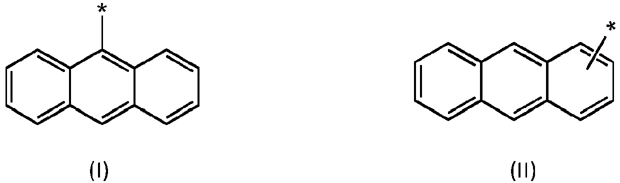 wobei das Symbol * eine Verknüpfung mit der Polymerkette darstellt.

3. Elastomer nach einem der Ansprüche 1 bis 2, wobei das Elastomer ein Copolymer von Ethylen und Butadien ist.

4. Elastomer nach einem der Ansprüche 1 bis 3, wobei das Elastomer 0,1 bis 3 Mol-%, vorzugsweise 0,1 bis 2 Mol-%, Anthracenyleinheit pro Mol Elastomer enthält.

5. Kautschukzusammensetzung auf Basis eines verstärkenden Füllstoffs, eines Vernetzungssystems und eines Dienelastomers gemäß einem der Ansprüche 1 bis 4.

6. Kautschukzusammensetzung nach Anspruch 5, wobei der verstärkende Füllstoff einen Ruß oder eine Kieselsäure oder eine Mischung davon umfasst.

7. Halbzeug für Reifen, umfassend eine Kautschukzusammensetzung gemäß Anspruch 6.

8. Reifen, der eine Kautschukzusammensetzung gemäß Anspruch 5 oder 6 oder ein Halbzeug gemäß Anspruch 7 umfasst.

## Claims

1. Diene elastomer copolymer obtained by copolymerization of one or more conjugated dienes with ethylene, an acyclic aliphatic α-monoolefin having 3 to 18 carbon atoms or a mixture thereof and including at least one polymer chain bearing pendant groups apart from at its ends, **characterized in that** the pendant groups are substituted or unsubstituted anthracenyl units.

2. Elastomer according to Claim 1, wherein the anthracenyl unit has the formula (I) or (II) 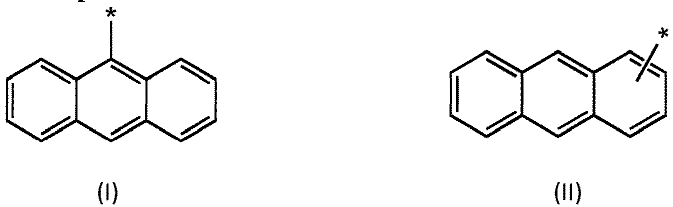 in which the symbol * represents an attachment to the polymer chain.

3. Elastomer according to either of Claims 1 and 2, the elastomer being a copolymer of ethylene and butadiene.

4. Elastomer according to any one of Claims 1 to 3, the elastomer containing from 0.1 mol% to 3 mol%, preferably from 0.1 mol% to 2 mol%, of anthracenyl units per mole of elastomer.

5. Rubber composition based on a reinforcing filler, on a crosslinking system and on a diene elastomer defined in any one of Claims 1 to 4.

6. Rubber composition according to Claim 5 wherein the reinforcing filler comprises a carbon black or a silica or a mixture thereof.

7. Semi-finished article for a tyre, comprising a rubber composition defined according to Claim 6.

8. Tyre comprising a rubber composition defined in Claim 5 or 6 or a semi-finished article defined in Claim 7.
